(19) Europäisches Patentamt
European Patent Office
Office européen des brevets

(11) **EP 2 193 285 B1**

(12) **EUROPÄISCHE PATENTSCHRIFT**

(45) Veröffentlichungstag und Bekanntmachung des Hinweises auf die Patenterteilung:
**28.03.2012 Patentblatt 2012/13**

(21) Anmeldenummer: **08802658.8**

(22) Anmeldetag: **26.09.2008**

(51) Int Cl.:
**F16F 7/10** *(2006.01)*

(86) Internationale Anmeldenummer:
**PCT/EP2008/008207**

(87) Internationale Veröffentlichungsnummer:
**WO 2009/043547 (09.04.2009 Gazette 2009/15)**

(54) **FLÜSSIGKEITSTILGER ZUR REDUKTION VON VERTIKALEN UND/ODER HORIZONTALEN SCHWINGUNGEN AN EINER BAU- ODER MASCHINENKONSTRUKTION**

LIQUID DAMPER FOR REDUCING VERTICAL AND/OR HORIZONTAL VIBRATIONS IN A BUILDING OR MACHINE STRUCTURE

AMORTISSEUR HYDRAULIQUE POUR RÉDUIRE LES OSCILLATIONS VERTICALES ET/OU HORIZONTALES SUR UNE STRUCTURE DE BÂTIMENT OU DE MACHINE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **27.09.2007 AT 15332007**

(43) Veröffentlichungstag der Anmeldung:
**09.06.2010 Patentblatt 2010/23**

(73) Patentinhaber: **BERNARD Ingenieure ZT GmbH 1020 Wien (AT)**

(72) Erfinder:
• **REITERER, Michael**
**A-7423 Wien (AT)**

• **KLUIBENSCHEDL, Andreas**
**A-6410 Telfs (AT)**

(74) Vertreter: **Grabherr, Claudia**
**Puchberger, Berger & Partner**
**Reichsratsstrasse 13**
**1010 Wien (AT)**

(56) Entgegenhaltungen:
**FR-A- 2 197 434       JP-A- 2 278 033**
**JP-A- 9 151 986       JP-A- 10 073 144**
**JP-A- 2000 018 322**

EP 2 193 285 B1

## Beschreibung

Die Erfindung betrifft einen Flüssigkeitstilger zur Reduktion von vertikalen und/oder horizontalen Schwingungen an einer Bau- oder Maschinenkonstruktion mit mindestens zwei teilweise mit Flüssigkeit gefüllten Kammern, die an ihren unteren Enden miteinander kommunizieren, wobei mindestens eine Kammer an ihrem oberen Ende luftdicht verschlossen ist, sodass über der Flüssigkeit ein abgeschlossener Luftraum gebildet ist und mindestens eine andere Kammer an ihrem oberen Ende zumindest teilweise offen ist.

## Stand der Technik

Der Einsatz von Masse-Feder-Dämpfer-Tilgern, wie von Petersen, C., (2001). Schwingungsdämpfer im Ingenieurbau. 1. Auflage, Herausgeber: Maurer Söhne GmbH&Co.KG, München, ISBN 3-00-008059-7 ausführlich beschrieben, ist Stand der Technik und wird zur Reduktion von vertikalen Schwingungen an Bau- und Maschinenbaukonstruktionen erfolgreich eingesetzt. Zur Dämpfung von horizontalen Schwingungen werden sogenannte Pendel-Tilger eingesetzt. Das Prinzip dieser beiden Tilgerarten basiert auf der optimalen Abstimmung der Entwurfsparameter (Eigenfrequenz und Dämpfung) auf eine ausgewählte Eigenfrequenz der betrachteten schwingungsanfälligen Struktur. Eine nachträgliche Veränderung der optimalen Entwurfsparameter ist nur mit erheblichem Aufwand, z.B. durch Austausch von Federelementen und/oder Veränderung der schwingenden Masse, möglich.

Als Alternative zum Masse-Feder-Dämpfer-Tilger existieren sogenannte Flüssigkeitstilger, die aus einem teilweise mit Flüssigkeit gefüllten U-förmigen Rohrsystem bestehen. Erste theoretische Untersuchungen der Flüssigkeitstilger wurden für horizontale und vertikale Schwingungen von Sun et al. (Sun, L.M., Fujino, Y., Koga, K., (1995). A Model Of Tuned Liquid Dampers For Suppressing Pitching Motions Of Structures. Earthquake Engineering and Structural Dynamics, Vol. 24, p. 625-636; und Sun, L.M., Nakaoka, T., et al., (1990). Tuned liquid damper for suppressing vertical vibration. In: Proc. 45th JSCE annual meeting, Vol.1, p. 978-979 (in Japanese)). durchgeführt. Eine umfassende Untersuchung von Flüssigkeitstilgern zur Reduzierung von horizontalen Brückenschwingungen wurde von Reiterer und Ziegler (Reiterer, M., Ziegler, F., (2006). Control of Pedestrian-Induced Vibrations of Long Span Bridges. Journal of Structural Control & Health Monitoring. John Wiley & Sons, Ltd. ISSN 1545-2255, Vol. 13, No. 6, p. 1003-1027) durchgeführt.

Die folgenden Patente liegen in Bezug auf Flüssigkeitstilger vor:

D1: JP 10220522 A (MITSUBISHI HEAVY IND LTD) 21. August 1998
D2: AT501870 B1 (TECHNISCHE UNIVERSITÄT WIEN) 15. August 2007
D3: JP 9151986 A (MITSUBISHI HEAVY IND LTD) 10. Juni 1997
D4: JP 5248491 A (MITSUBISHI HEAVY IND LTD) 24. September 1993

Die Druckschrift D1 beschreibt eine Vorrichtung zur Schwingungsdämpfung, mit einem U-förmigen Tank, der im unteren Bereich mit einer Flüssigkeit gefüllt ist und über der Flüssigkeit jeweils nur einen einzelnen Gasraum (links- oder rechtsseitig) besitzt, deren Druck unter Energieaufwand über Ein-/Auslassventile gesteuert wird.

Die Druckschrift D2 beschreibt einen Flüssigkeitstilger mit zwei Kammern, die beide gegenüber der Umgebung gasdicht verschlossen sind oder von denen zumindest eine symmetrisch zur Hochachse des Flüssigkeitstilgers, vorzugsweise symmetrisch zur Hochachse der ersten Kammer ausgeführt ist. Diese Druckschrift offenbart ferner eine Anpassung des gewünschten Tilgungsverhaltens durch gesteuerte Zu- und Abfuhr von Gas in mindestens einen der Gasräume, was jedoch von Seiten des Energiebedarfs für die Steuerung und für das Zu- und Abführen von Gas praktische Schwierigkeiten macht.

Die Druckschrift D3 beschreibt ein rein passives System mit jeweils einer über der links- und rechtsseitigen Flüssigkeitsoberfläche gelegenen Luftkammer. Aus der Druckschrift D3 ist weiters eine Kammer bekannt, bei der an dem nach oben offenen Ende ein in seiner Durchtrittsfläche veränderbarer Austritt angeordnet ist.

Die Druckschrift D4 beschreibt ebenfalls ein rein passives System, wo die über der Flüssigkeit angeordneten Kammern nach oben hin über ein Ventil dicht abgeschlossen sind. Die Ventile führen direkt ins Freie und dienen vermutlich dem Druckausgleich bei Temperaturänderungen.

Weitere Flüssigkeitstilger sind aus der Dokumente JP 02 278033 A und JP 2000 018322 A bekannt.

Aufgabe der vorliegenden Erfindung ist es einen Flüssigkeitstilger zu schaffen, der mit geringem Energieaufwand ein unproblematisches Anpassen des Tilgungsverhaltens an die zu erwartende Belastung einer Bau- oder Maschinenbaukonstruktion erlaubt.

Die Aufgabe wird dadurch gelöst, dass bei dem eingangs genannten Flüssigkeitstilger nur eine der beiden Kammern luftdicht verschlossen wird und die zweite Kammer eine Luftaustrittsöffnung nach oben hin aufweist. Der abgeschlossene Luftraum ist in mindestens zwei Luftteilräume unterteilt, wobei ein Luftteilraum unmittelbar über der Flüssigkeit liegt und ein oder mehrere Luftteilräume über Öffnungen mit dem Luftteilraum unmittelbar über der Flüssigkeit oder mit dem jeweils benachbarten Luftteilraum verbunden sind, wobei diese Öffnungen unabhängig von einander dichtend verschließbar sind.

Dabei können die Luftteilräume der dicht verschlossenen Kammer in Serie übereinander oder parallel nebeneinander liegen und können als Rechteck- oder Rundrohrkammern ausgeführt sein.

Durch Öffnen und Schließen der Öffnungen kann das Gesamtvolumen von dem unmittelbar über der Flüssigkeit befindlichen Luftteilraum und von mit diesem kommunizierenden Luftteilräumen verändert werden und damit die Eigenfrequenz des Flüssigkeitstilgers verändert werden.

Im Gegensatz zum Stand der Technik arbeitet die vorliegende Erfindung ohne das gesteuerte Zu- und Abführen von Gas. Die Tilgerfrequenz wird mit wesentlich geringerem Energieaufwand über die passend gewählte Größe des über der Flüssigkeit gelegenen Gesamtvolumens (Summe der parallel oder seriell geschalteten offenen Luftkammern) eingestellt. Die optimale Tilgerdämpfung wird bei der vorliegenden Erfindung über passende Wahl der in seiner Durchtrittsfläche adaptiv veränderbaren Luftaustrittsöffnung eingestellt.

In die Öffnungen sind vorzugsweise über eine Steuerung, z.B. über einen Microcontroller ansteuerbare Ventile eingebaut.

Vorzugsweise weist die Kammer mit dem oben offenen Ende einen in seiner Durchtrittsfläche veränderbaren Austritt auf, der vorzugsweise eine über eine Steuerung, wie den oben genannten Microcontroller, ansteuerbare Dosseleinrichtung ist. Durch Veränderung der Durchtrittsfläche kann eine Dämpfungsanpassung an die Belastung erfolgen.

Zur Verstärkung der Dämpfungswirkung ist die Anwendung von Flüssigkeiten mit einer Dichte $\rho > 1000 kg/m^3$ vorteilhaft. Hierbei werden insbesondere flüssige Medien mit einer Dichte von $\rho = 1000\text{-}5000\ kg/m^3$ (z.B. Betonit $\rho = ca.\ 2300\ kg/m^3$) vorgesehen.

Beim Einsatz des erfindungsgemäßen Flüssigkeitstilgers wird die Eigenfrequenz der Bau- und Maschinenkonstruktion unter einer bevorstehenden Belastung berechnet, die dazu optimale Eigenfrequenz des Flüssigkeitstilgers ermittelt und das Gesamtvolumen von dem unmittelbar über der Flüssigkeit befindlichen Luftteilraum und den mit diesem kommunizierenden Luftteilräumen an das aus der optimalen Eigenfrequenz resultierende optimale Volumen möglichst gut angenähert, indem Öffnungen zwischen den Luftteilräumen, vorzugsweise über von einer Steuerung gesteuerte Ventile, geöffnet und/oder geschlossen werden.

Ferner wird vorzugsweise die optimale Dämpfung unter einer bevorstehenden Belastung berechnet und die Fläche des Austritts der zumindest teilweise offenen Kammer für die optimale Dämpfung, vorzugsweise über eine von einer Steuerung gesteuerten Drosseleinrichtung, eingestellt. Die Daten für die Anpassung der Fläche des Austritts an die optimale Dämpfung für verschiedene Belastungen können vorab experimentell für jeden Flüssigkeitstilger bestimmt werden.

Als Basis für die Berechnung der Eigenfrequenz und der optimalen Dämpfung der Bau- oder Maschinenkonstruktion unter einer bevorstehenden Belastung wird vorteilhafterweise das Gewicht der belastenden Elemente, insbesondere über eine dynamische Waage, bestimmt.

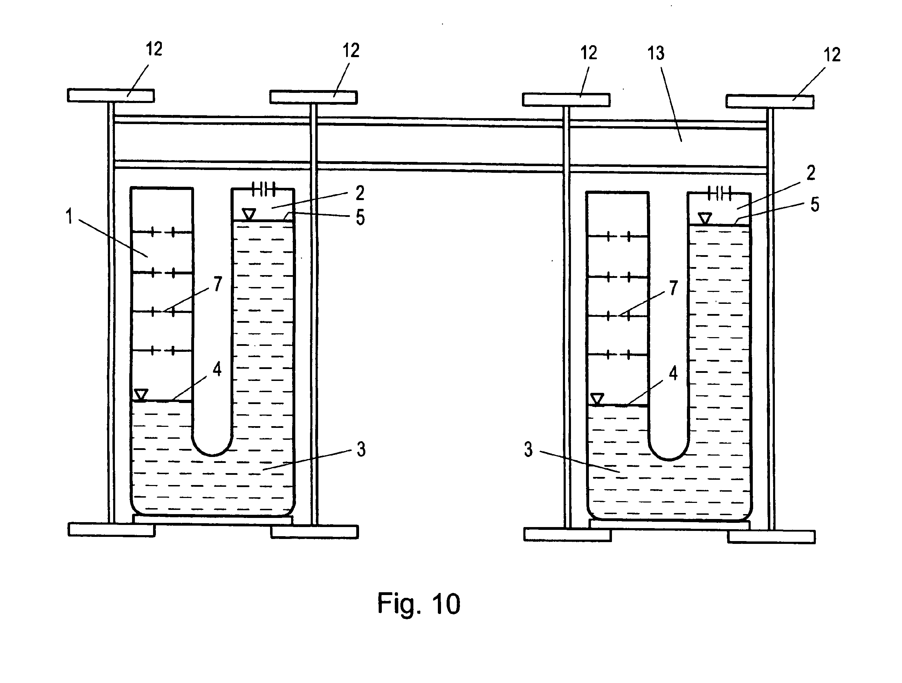

Nunmehr soll die Erfindung anhand der beiliegenden Zeichnungen verdeutlicht werden, in denen Fig.1 einen Flüssigkeitstilger für vertikale Schwingungen, Fig.2 einen Flüssigkeitstilger für horizontale Schwingungen und Fig.3 einen Flüssigkeitstilger für horizontale und vertikale Schwingungen zeigt, und in denen die Figuren 4 und 5 zwei mögliche Ausführungen des luftdicht geschlossenen Endes erfindungsgemäßer Flüssigkeitstilger und die Figuren 6 bis 9 Querschnitte durch mögliche Ausführungen des luftdicht geschlossenen Endes erfindungsgemäßer Flüssigkeitstilger zeigen, und in denen schließlich Fig.10 den Querschnitt durch eine Brückenkonstruktion mit darin angebrachten Flüssigkeitstilgern zeigt.

Die Bauweise des Flüssigkeitstilgers zur Dämpfung von horizontalen und/oder vertikalen Schwingungen zeichnet sich durch die über einen Microcontroller gesteuerte optimale Eigenfrequenz- und Dämpfungsanpassung aus. Der Flüssigkeitstilger besteht aus einem teilweise mit Flüssigkeit der Dichte $\rho$ gefüllten Rohrsystem mit dem Querschnitt A von beliebiger Form. Prinzipiell werden in der Erfindungsbeschreibung die folgenden drei Arten von Flüssigkeitstilger unterschieden:

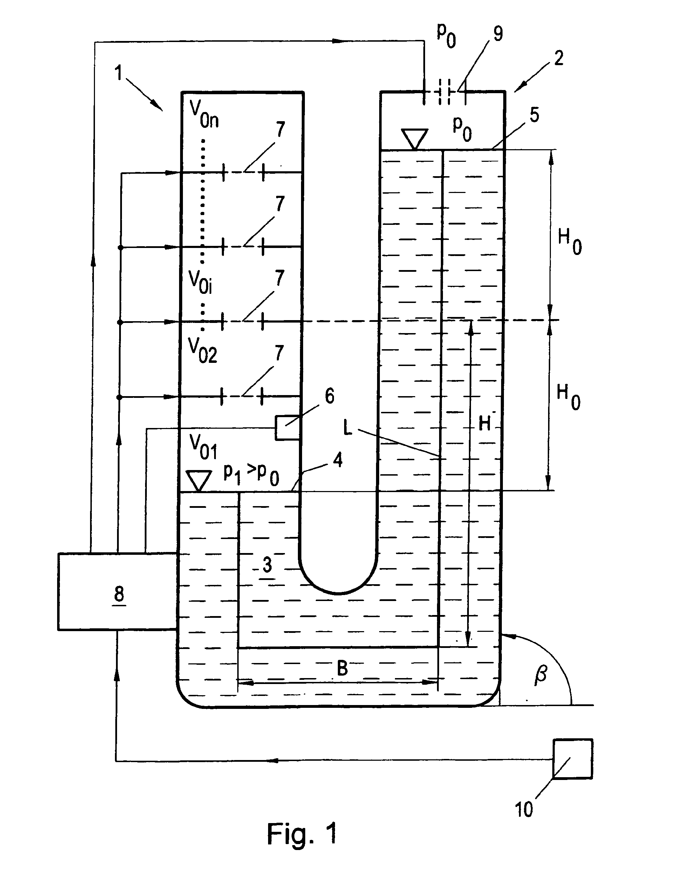

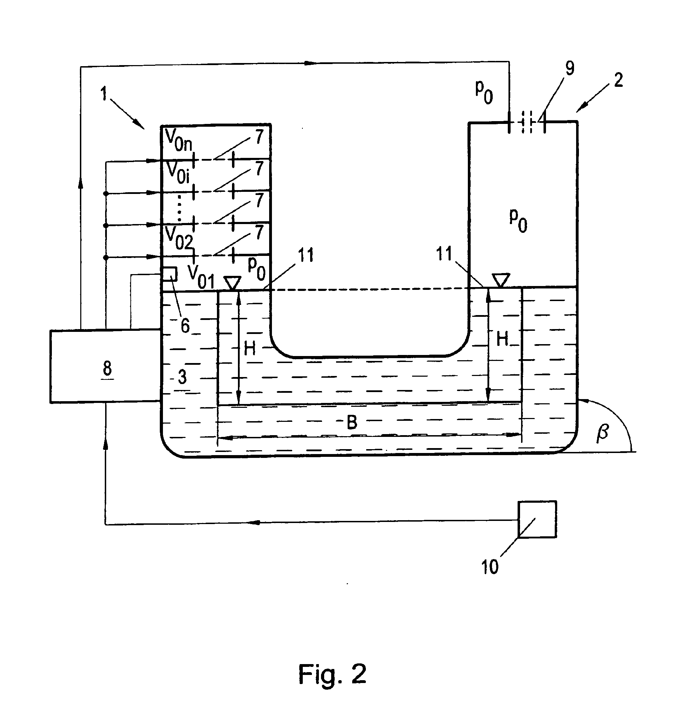

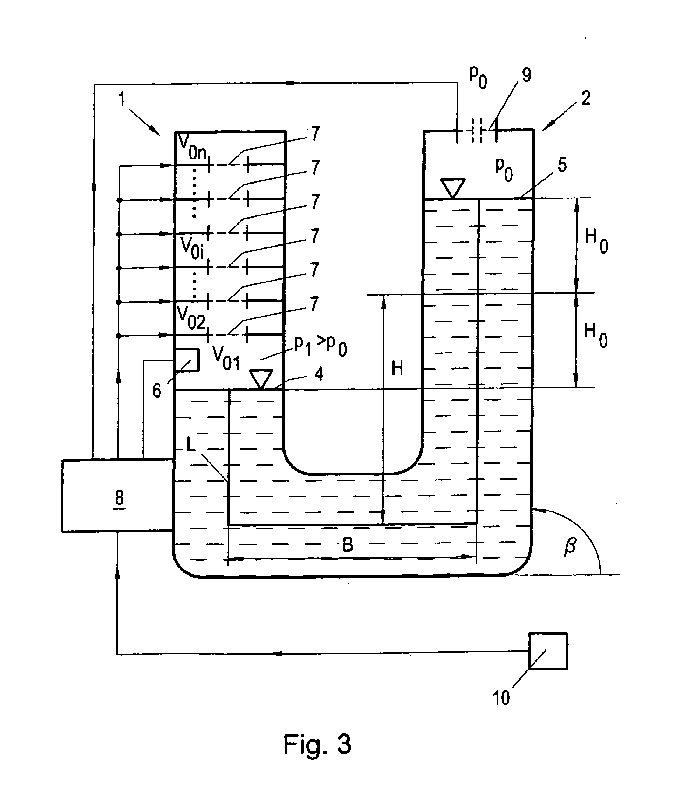

- Vertikal - Flüssigkeitstilger (Fig. 1)
- Horizontal - Flüssigkeitstilger (Fig.2)
- Kombinierter Horizontal - und Vertikal - Flüssigkeitstilger (Fig.3)

### Vertikal - Flüssigkeitstilger (Fig.1)

Der Vertikal-Flüssigkeitstilger wird zur Dämpfung von vorzugsweise vertikalen Strukturschwingungen eingesetzt. Das teilweise mit Flüssigkeit 3 gefüllte Rohrsystem besteht aus einem luftdicht verschlossenen Rohrteil 1, wobei der Luftraum mit dem Volumen $V_0$ oberhalb des Flüssigkeitsspiegels in Luftteilräume mit Teilvolumina $V_{01}$ bis $V_{0n}$ unterteilt ist. Im luftdicht verschlossenen Rohrteil 1 wird der Überdruck $p_1 = p_0 + 2\rho g H_0$ aufgeprägt, wobei $p_0$ der Atmosphärendruck ist und $2H_0$ das Maß ist, um das der Flüssigkeitsspiegel 4 im geschlossenen Rohrteil 1 gegenüber dem Flüssigkeitsspiegel 5 im offenen Rohrteil 2 versetzt ist. Die zeitliche Änderung des Überdruckes wird mit Hilfe eines Drucksensors 6 überwacht. Damit ist auch die Ermittlung der statischen und dynamischen Flüssigkeitsspiegelschwankungen möglich.

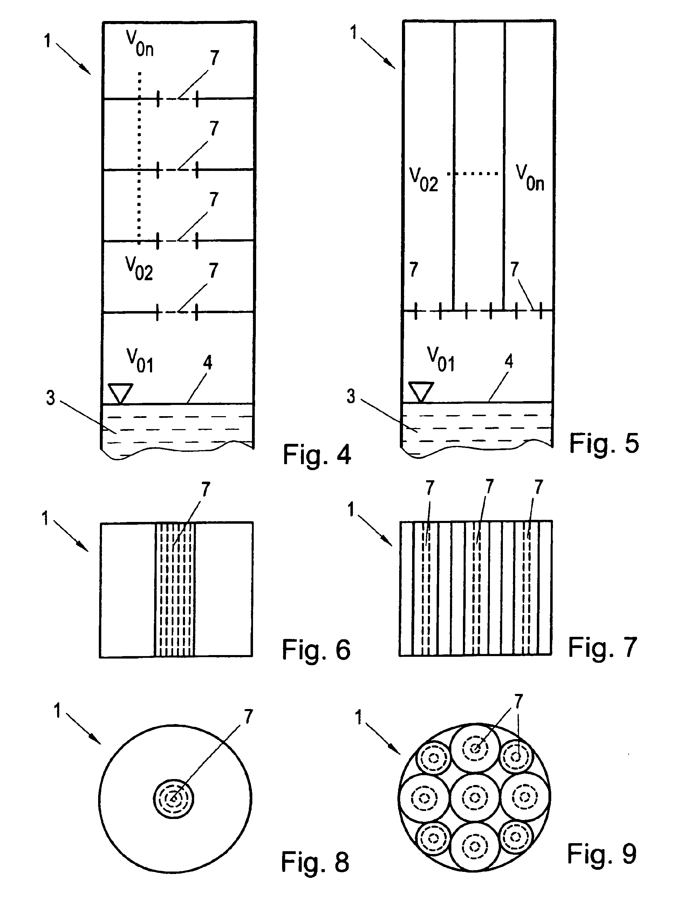

Die Anordnung der Luftteilräume ist sowohl in Serien- (Fig.4) als auch in Parallelschaltung (Fig.5) möglich, wobei Rechtecks- (Fig.6 und Fig.7) und Rundrohrkammern (Fig.8 und Fig.9) ausgeführt werden können. Im Falle der Serienschaltung ist eine Kammer mit der nächst folgenden über ein öffenbares Ventil 7 verbunden. Bei der Parallelschaltung sind die Kammern nebeneinander angeordnet. Das Öffnen und Schließen der Kammern wird über einen Microcontroller 8 aktiv gesteuert. Die Anzahl der geöffneten Kammern und damit das aktuell vorhandene Luftvolumen $V$ werden in Abhängigkeit von der gewünschten Eigenfrequenz (=erster Entwurfsparameter) des Flüssigkeitstilgers optimal eingestellt. Der Zusammenhang zwischen Öffnungsgröße der Drossel und der daraus resultierenden Flüssigkeitsdämpfung wurde von Fried, E., Idelchik, I.E., (1989). Flow Resistance: a Design Guide for Engineers, Hemisphere, New York., für strömende Medien experimentell untersucht und tabellarisch gelistet.

Der zweite Rohrteil 2 des Vertikal-Flüssigkeitstilgers wird teilweise offen ausgeführt. Hier ist der Flüssigkeitsspiegel 5 um das Maß $2H_0$ gegenüber dem geschlossenen Rohrteil 1 in vertikaler Richtung versetzt. Oberhalb des Flüssigkeitsspiegels 5 befindet sich ein Luftvolumen das den natürlichen Atmosphärendruck $p_0$ aufgeprägt hat. Bei Bewegung der Flüssigkeitssäule kann die Luft über eine variable Drosseleinrichtung nach oben hinausströmen. Die aktuelle Größe der Drosselöffnung 9, wird über einen Microcontroller 8 in Abhängigkeit von der gewünschten Flüssigkeitsdämpfung (=zweiter Entwurfsparameter) optimal eingestellt.

Der Microcontroller 8 des Vertikal-Flüssigkeitstilger wird an eine dynamische Waage 10 und/oder an ein beliebiges System zur Gewichtsbestimmung (z.B. Weigh-In-Motion-System) gekoppelt. In Abhängigkeit von den unterschiedlichen dynamischen Belastungszuständen der zu bedämpfenden Struktur (unbelastet, teilweise belastet, vollbelastet) wird über einen Beschleunigungssensor die Änderung der Eigenfrequenz und damit die Größe der Zusatzlast bestimmt. Das Weight-In-Motion-System wird z.B. vor Brücken angeordnet und erlaubt die Ermittlung von Achslasten und damit die Vorausberechnung der geänderten Brückeneigenfrequenz. Die Ermittlung des aktuellen Gewichts über die dynamische Waage 10 und Weitergabe der Information an den Microcontroller 8 erlaubt die Berechnung der optimalen Eigenfrequenz und Dämpfung des Flüssigkeitstilgers. Die optimale Eigenfrequenz und Dämpfung wird dann über passende Wahl der geöffneten Luftteilraumanzahl und über die Öffnungsweite der Drosseleinrichtung 9 eingestellt.

Die lineare Eigenfrequenz des Vertikal-Flüssigkeitstilgers ergibt sich durch Anwendung der instationären Bernoulligleichung im bewegten Bezugssystem entlang einer relativen inkompressiblen Stromline,

$$f_A = \frac{1}{2\pi} \sqrt{\frac{2g}{L}\left[\sin\beta + \frac{n\,h_0}{2H_a}\left(1 + \frac{2H_0}{h_0}\right)\right]}, \qquad g = 9{,}81\,m/s^2, \; h_0 \cong 10\,m, \qquad (1)$$

wo $h_0 = p_0/\rho g$ die dem Atmosphärendruck $p_0$ äquivalente Flüssigkeitssäule und $1 \le n \le 1{,}4$ den Exponent der linearisiert eingesetzten polytropen Gaskompression bezeichnen. Die Gesamtlänge des Flüssigkeitsfadens und der Neigungswinkel der vertikalen Rohrteile werden mit $L$ und $\beta$ bezeichnet. Die fiktive Höhe der sich im luftdicht verschlossenen Rohrteil einstellenden Luftfeder $H_a = \sum V_{0i}/A$ ist der wesentliche Einflussparameter auf die Eigenfrequenz des Vertikal-Flüssigkeitstilgers. Die aktive Steuerung der Eigenfrequenz erfolgt durch Aktivierung einer optimalen Anzahl von in Serie oder parallel geschalteten Luftteilräumen über öffenbare Ventile 7.

Der zweite wesentliche Entwurfsparameter des Vertikal-Flüssigkeitstilgers ist die Flüssigkeitsdämpfung. Diese wird mit dem linearisierten Lehr'schen Dämpfungsmaß $\zeta_A$ definiert. Die aktive Regelung der Flüssigkeitsdämpfung auf den optimalen Wert erfolgt ebenfalls mit Hilfe des Microcontrollers 8 über eine Drosseleinrichtung 9. Die dem linearisierten Dämpfungsmaß $\zeta_A$ zugehörige Größe der Drosselöffnung kann vorab experimentell für jeden Flüssigkeitstilger bestimmt werden.

Die Effektivität des Vertikal-Flüssigkeitstilgers wird über den Geometriefaktor $\kappa_V = 2H_0 \sin\beta/L$ definiert. Eine möglichst große Anfangsauslenkung $H_0$ in statischer Ruhelage sowie $\beta = \pi/2$ ist daher von Vorteil. Die aktive Masse des Vertikal-Flüssigkeitstilgers ist mit $m_A = \kappa_V m_f$ definiert, wobei $m_f = \rho\,A\,L$.

### Horizontal - Flüssigkeitstilger (Fig.2)

Der Horizontal-Flüssigkeitstilger wird zur Dämpfung von vorzugsweise horizontalen Strukturschwingungen eingesetzt. Das teilweise mit Flüssigkeit 3 gefüllte Rohrsystem besteht aus einem luftdicht verschlossenen Rohrteil 1, wobei der Luftraum mit dem Volumen $V_0$ oberhalb des Flüssigkeitsspiegels in Luftteilräume mit den Teilvolumina $V_{01}$ bis $V_{0n}$ unterteilt wird. In der statischen Ruhelage der Flüssigkeitsspiegel 11 ist beidseitig der natürliche Atmosphären-

druck $p_0$ aufgeprägt, d.h. es wirkt kein Überdruck. Der innerhalb des luftdicht verschlossenen Rohrteils 1 angebrachte Drucksensor 6 liefert den Wert der Druckänderung bei Einsetzen der Flüssigkeitsschwingungen. Die restlichen Details zur Ausführung und Steuerung des Horizontal-Flüssigkeitstilgers sind analog zum Vertikal-Flüssigkeitstilger.

Die lineare Eigenfrequenz des Horizontal-Flüssigkeitstilgers ergibt sich durch Anwendung der instationären Bernoulligleichung im bewegten Bezugssystem entlang einer relativen inkompressiblen Stromline,

$$f_A = \frac{1}{2\pi} \sqrt{\frac{2g}{L}\left[\sin\beta + \frac{n\,h_0}{2\,H_a}\right]}, \qquad g = 9{,}81\,m/s^2,\ h_0 \cong 10\,m, \qquad (2)$$

wo $h_0 = p_0/\rho g$ die dem Atmosphärendruck $p_0$ äquivalente Flüssigkeitssäule und $1 \le n \le 1{,}4$ den Exponent der linearisiert eingesetzten polytropen Luftkompression bezeichnen. Die Gesamtlänge des Flüssigkeitsfadens und der Neigungswinkel der vertikalen Rohrteile werden mit $L$ und $\beta$ bezeichnet. Die fiktive Höhe der der sich im luftdicht verschlossenen Rohrteil einstellenden Luftfeder $H_a = \sum V_0/A$ ist der wesentliche Einflußparameter auf die Eigenfrequenz des Vertikal-Flüssigkeitstilgers.

Die Effektivität des Horizontal-Flüssigkeitstilgers wird über den Geometriefaktor $\kappa_H = (B + 2H\cos\beta)/L$ definiert. Eine möglichst große horizontale Länge $B$ in statischer Ruhelage ist daher von Vorteil. Die aktive Masse des Horizontal-Flüssigkeitstilgers ist mit $m_A = x_H\,m_f$ definiert.

**Kombinierter Vertikal - und Horizontal - Flüssigkeitstilger (Fig.3)**

Der kombinierte Vertikal- und Horizontal-Flüssigkeitstilger wird zur Dämpfung von vertikalen und/oder horizontalen Strukturschwingungen eingesetzt. Prinzipiell handelt es sich hierbei um eine Kombination der beiden o.a. Flüssigkeitstilger, wo die Geometrie so gewählt wird, dass eine möglichst optimale Dämpfung von vertikalen und/oder horizontalen Schwingungen möglich ist. Die lineare Eigenfrequenz und Ausführung ist analog zum Vertikal-Flüssigkeitstilger, wobei der horizontale Rohrteil verlängert wird. Die großen Vorteile dieses Flüssigkeitstilgers sind:

- Bei Auftreten von gekoppelten Vertikal- und Horizontalschwingungen kann mit einem einzigen Flüssigkeitstilger die gekoppelte Schwingung optimal gedämpft werden.
- In Abhängigkeit von der Belastung (Kraftrichtung und Erregerfrequenz) können kritische Eigenfrequenzen mit zugehörigen Schwingungsformen in vertikaler oder horizontaler Richtung angeregt werden. Durch passende Wahl der Anzahl an geöffneten Luftteilräumen kann die Eigenfrequenz des Flüssigkeitstilgers optimal auf die vertikale oder horizontale Schwingung abgestimmt werden.

Die Effektivität des kombinierten Vertikal- und Horizontal-Flüssigkeitstilgers wird über die Geometriefaktoren $\kappa_v = 2H_0 \sin\beta/L$ und $\kappa_H = (B + 2H\cos\beta)/L$ definiert. Es besteht die Möglichkeit dominante Schwingungen in eine bestimmte Richtung mit höherer Effektivität zu gewichten.

**Optimale Abstimmung der Flüssigkeitstilger**

Die optimale Abstimmung des Flüssigkeitstilgers erfolgt in Analogie zum konventionellen Masse-Feder-Dämpfer Tilger, wie von Reiterer (Reiterer, M., Ziegler, F., (2006). Control of Pedestrian-Induced Vibrations of Long Span Bridges. Journal of Structural Control & Health Monitoring. John Wiley & Sons, Ltd. ISSN 1545-2255, Vol. 13, No. 6, p. 1003-1027) gezeigt. Die optimalen Entwurfsparameter für den Masse-Feder-Dämpfer-Tilger wurden erstmalig von Den Hartog (Den Hartog, J.P., (1936). Mechanische Schwingungen. Verlag von Julius Springer, Berlin) vorgelegt, $\dot{f}_s$ und $M^*$ bezeichnen die lineare Eigenfrequenz und die modale Masse der Struktur,

$$\delta_{opt}^* = \frac{\dot{f}_A}{\dot{f}_s} = \frac{1}{1+\mu^*}, \qquad \zeta_{A,opt}^* = \sqrt{\frac{3\mu^*}{8\left(1+\mu^*\right)}}, \qquad \mu^* = \frac{\dot{m}_A}{\dot{M}} \qquad (3)$$

wo $\delta_{opt}^{*}$ und $\zeta_{A,opt}^{*}$ das optimale Frequenzverhältnis und das optimal Lehr'sche Dämpfungsmaß des äquivalenten linearen Masse-Feder-Dämpfer-Tilger definieren. Für die Berechnung der optimalen Entwurfsparameter des Flüssigkeitstilgers wird das äquivalente Massenverhältnis wie folgt definiert,

$$\mu^{\bullet} = \frac{m_A^{\bullet}}{M^{\bullet}} = \frac{\mu \kappa^2}{1 + \mu\left(1 - \kappa^2\right)}, \qquad \mu = \frac{m_f}{M}. \qquad (4)$$

Für den dimensionslosen Geometriefaktor $\kappa$ sind die entsprechenden Faktoren $\kappa_V$ bzw. $\kappa_H$ einzusetzen. Die optimalen Entwurfsparameter des Flüssigkeitstilgers sind dann wie folgt definiert,

$$\delta_{opt} = \frac{f_A}{f_S} = \frac{\delta_{opt}^{*}}{\sqrt{1 + \mu\left(1 - \kappa^2\right)}}, \qquad \zeta_{A,opt} = \zeta_{A,opt}^{*}. \qquad (5)$$

## Anwendungsbeispiel Stahlbrücke

Als praktisches Beispiel wird eine einfeldrige Stahlbrücke mit offenem Querschnitt und einer Spannweite von $l = 30m$ betrachtet. Die Längsträger der Brücke bestehen aus I-Profilen mit einer Höhe von 1,2m die über Querträger miteinander verbunden sind. Die Masse pro Längeneinheit und Biegesteifigkeit der Brücke betragen $\rho A = 2670kg$ und $EJ = 1,1 \times 10^{10} N/m^2$. In weiterer Folge werden zwei unterschiedliche dynamische Belastungszustände, z.B. zufolge Zugsüberfahrt, untersucht:

- Fall 1: Zusatzmasse pro Längeneinheit $(\rho A)_{ZUS1} = 700kg/m$
- Fall 2: Zusatzmasse pro Längeneinheit $(\rho A)_{ZUS2} = 2100kg/m$
- Fall 3: Brücke unbelastet

Der Zustand "Brücke unbelastet" wird im Hinblick auf das Ausschwingen der Brücke, z.B: nach erfolgter Zugsüberfahrt oder Böenanregung, untersucht. Die modalen (bewegten) Massen der Brücke betragen somit für das Einfeldsystem $M_{ZUS1} = \llcorner \rho A + (\rho A)_{ZUS1} \lrcorner l/2 = 50550kg$, $M_{ZUS2} = \llcorner \rho A + (\rho A)_{ZUS2} \lrcorner l/2 = 71550kg$ und $M = \rho Al / 2 = 40050$ kg, (siehe Reiterer, M., (2004). Schwingungsdämpfung von Baukonstruktionen, insbesondere von Brücken. Dissertation, Fakultät für Bauingenieurwesen, Technische Universität Wien, Institut für Allgemeine Mechanik). Aufgrund der unterschiedlichen Belastungszustände ergeben sich die Grundfrequenzen mit dominant vertikaler Schwingungsform der Brücke zu, (siehe auch Reiterer, M. (2004)).

- Fall 1: Grundfrequenz vertikal $f_{S.ZUS1} = 3,15$ $Hz$
- Fall 2: Grundfrequenz vertikal $f_{S,ZUS2} = 2,65$ $Hz$
- Fall 3: Grundfrequenz vertikal $f_S = 3,54$ $Hz$

Zur Schwingungsdämpfung der Brücke wird ein Vertikal-Flüssigkeitstilger installiert, wobei die Gesamtmasse der Flüssigkeit mit $m_f = 800$ $kg$ gewählt wird. Es werden mit einem einzigen Flüssigkeitstilger die Schwingungen aller drei verschiedenen Belastungszustände (Fall 1 bis 3) reduziert. Die Verhältnisse von Flüssigkeitsmasse zur modalen (bewegten) Brückenmasse ergeben sich in Abhängigkeit vom betrachteten dynamischen Belastungszustand entsprechend Gleichung (4) zu $\mu_{ZUS1} = 1,6\%$ $\mu_{ZUS2} = 1,2\%$ und $\mu = 2,0\%$. Die Stromfadenlänge, die vertikale Flüssigkeitsspiegelhöhendifferenz und der Neigungswinkel der vertikalen Rohrschenkel werden mit $L=1,5m$, $H_0 = 0,3m$ und $\beta = \pi/2$ gewählt. Die Querschnittsfläche des Rohrsystems beträgt damit A = 0,53$m^2$. Der Geometriefaktor des Vertikal-Flüssigkeitstilgers ergibt sich zu $\kappa_V = 0,4$, (siehe oben).

Nach Festlegung der Konfiguration des Vertikal-Flüssigkeitstilgers können durch Auswerten der Gleichungen (4), (3) und (5) die optimalen Entwurfsparameter des Flüssigkeitstilgers in Abhängigkeit vom jeweiligen dynamischen Belastungszustand berechnet werden,

- Fall 1: $f_{A,opt,ZUS1} = 3,12\,Hz$ , $\zeta_{A,opt} = 3,1\%$

- Fall 2: $f_{A,opt,ZUS2} = 2,63\,Hz$ , $\zeta_{A,opt} = 2,7\%$

- Fall 3: $f_{A,opt} = 3,50\,Hz$ , $\zeta_{A,opt} = 3,4\%$

Die für den jeweiligen Belastungszustand einzustellende fiktive Höhe der Luftfeder ergibt sich durch Umformung der Gleichung (1) mit n = 1,2 zu

- Fall 1: $H_{a,ZUS1} = 0,23\,m$

- Fall 2: $H_{a,ZUS2} = 0,32\,m$

- Fall 3: $H_a = 0,18\,m$

Die Gesamthöhe der Luftfeder im luftdicht verschlossenen Rohrteil wird demnach mit dem Maximalwert von 0,32m festgelegt und die weitere Unterteilung der Luftkammern erfolgt in den Stufen 0,23m und 0,18m von der Flüssigkeitsspiegeloberfläche in statischer Ruhelage aus gemessen. In Abhängigkeit vom jeweiligen dynamischen Belastungszustand kann somit die zugehörige optimale Eigenfrequenz des Flüssigkeitstilgers über Aktivierung des entsprechenden Luftvolumens eingestellt werden.

Die Einstellung der optimalen Flüssigkeitsdämpfung erfolgt über die variable Drosseleinrichtung am offenen Rohrteil. Die erforderliche Größe der Öffnung wird experimentell bestimmt.

**Patentansprüche**

1. Flüssigkeitstilger zur Reduktion von vertikalen und/oder horizontalen Schwingungen an einer Bau- oder Maschinenkonstruktion mit mindestens zwei teilweise mit Flüssigkeit gefüllten Kammern, die an ihren unteren Enden miteinander kommunizieren, wobei mindestens eine Kammer an ihrem oberen Ende luftdicht verschlossen ist, sodass über der Flüssigkeit ein abgeschlossener Luftraum gebildet ist und mindestens eine andere Kammer an ihrem oberen Ende zumindest teilweise offen ist, **dadurch gekennzeichnet, dass** der abgeschlossene Luftraum ($V_o$) in mindestens zwei Luftteilräume ($V_{01}$ bis $V_{0n}$) unterteilt ist, wobei ein Luftteilraum ($V_{01}$) unmittelbar über der Flüssigkeit (3) liegt und ein oder mehrere Luftteilräume ($V_{02}$ bis $V_{0n}$) über Öffnungen (7) mit dem Luftteilraum ($V_{01}$) unmittelbar über der Flüssigkeit (3) und/oder mit dem jeweils benachbarten Luftteilraum ($V_{02}$ bis $V_{0n}$) verbunden sind, wobei diese Öffnungen (7) unabhängig von einander dichtend verschließbar sind.

2. Flüssigkeitstilger nach Anspruch 1, **dadurch gekennzeichnet, dass** die Luftteilräume ($V_{01}$, bis $V_{0n}$) als Rechteck- oder Rundrohrkammern ausgeführt sind.

3. Flüssigkeitstilger nach Anspruch 1 oder 2, **dadurch gekennzeichnet, dass** in die Öffnungen (7) über eine Steuerung (8) ansteuerbare Ventile eingebaut sind.

4. Flüssigkeitstilger nach einem der vorhergehenden Ansprüche, **dadurch gekennzeichnet, dass** die Kammer (2) mit dem oben offenen Ende in an sich bekannter Weise einen in seiner Durchtrittsfläche veränderbaren Austritt (9) aufweist.

5. Flüssigkeitstilger nach Anspruch 4, **dadurch gekennzeichnet, dass** der in seiner Durchtrittsfläche veränderbarer Austritt (9) eine über eine Steuerung (8) ansteuerbare Drosseleinrichtung ist.

**6.** Flüssigkeitstilger nach einem der Ansprüche 1 bis 5, **dadurch gekennzeichnet, dass** die im Flüssigkeitstilger enthaltene Flüssigkeit eine Dichte $\rho > 1000 kg/m^3$, vorzugsweise eine Dichte von $\rho = 1000 - 5000$ $kg/m^3$ hat.

**Claims**

**1.** Liquid shock absorber for reducing vertical and/or horizontal vibrations on a building or machine structure, with at least two chambers which are partially filled with liquid and which communicate with one another at their lower ends, at least one chamber being closed, air-tight, at its upper end, so that a closed-off air space is formed above the liquid, and at least one other chamber being at least partially open at its upper end, **characterized in that** the closed-off air space ($V_0$) is subdivided into at least two air subspaces ($V_{01}$ to $V_{0n}$), one air subspace ($V_{01}$) lying directly above the liquid (3), and one or more air subspaces ($V_{02}$ to $V_{0n}$) being connected via orifices (7) to the air subspace ($V_{01}$) directly above the liquid (3) and/or to the respectively adjacent air subspace ($V_{02}$ to $V_{0n}$), these orifices (7) being sealingly closable independently of one another.

**2.** Liquid shock absorber according to Claim 1, **characterized in that** the air subspaces ($V_{01}$ to $V_{0n}$) are designed as rectangular or circular tube chambers.

**3.** Liquid shock absorber according to Claim 1 or 2, **characterized in that** valves activatable via a control (8) are incorporated into the orifices (7).

**4.** Liquid shock absorber according to one of the preceding claims, **characterized in that** the chamber (2) having the end open at the top has in a way known per se an outlet (9) of variable passage area.

**5.** Liquid shock absorber according to Claim 4, **characterized in that** the outlet (9) of variable passage area is a throttle activatable via a control (8).

**6.** Liquid shock absorber according to one of Claims 1 to 5, **characterized in that** the liquid contained in the liquid shock absorber has a density $\rho > 1000\ kg/m^3$, preferable a density of $\rho = 1000\text{-}5000\ kg/m^3$.

**Revendications**

**1.** Amortisseur hydraulique pour réduire des vibrations verticales et/ou horizontales sur une structure de bâtiment ou de machine, comprenant au moins deux chambres qui sont remplies partiellement avec un liquide et communiquent entre elles à leurs extrémités inférieures, au moins une chambre étant fermée de façon imperméable à l'air à son extrémité supérieure, de manière à créer un espace fermé rempli d'air au-dessus du liquide, et au moins une autre chambre étant au moins partiellement ouverte à son extrémité supérieure, **caractérisé par le fait que** l'espace rempli d'air ($V_0$) fermé est divisé en au moins deux espaces d'air élémentaires ($V_{01}$ à $V_{0n}$), sachant qu'un espace d'air élémentaire ($V_{01}$) se situe directement au-dessus du liquide (3) et un ou plusieurs espaces d'air élémentaires ($V_{02}$ à $V_{0n}$) communiquent par des ouvertures (7) avec l'espace d'air élémentaire ($V_{01}$), situé directement au-dessus du liquide (3), et/ou avec l'espace d'air élémentaire ($V_{02}$ à $V_{0n}$) respectivement adjacent, lesdites ouvertures (7) pouvant être fermées de manière étanche indépendamment les unes des autres.

**2.** Amortisseur hydraulique selon la revendication 1, **caractérisé par le fait que** les espaces d'air élémentaires ($V_{01}$ à $V_{0n}$) sont réalisés comme chambres de forme rectangulaire ou tubulaire.

**3.** Amortisseur hydraulique selon la revendication 1 ou 2, **caractérisé par le fait que** des clapets, pouvant être activés par une commande (8), sont montés dans les ouvertures (7).

**4.** Amortisseur hydraulique selon une des revendications précédentes, **caractérisé par le fait que** la chambre (2), dont l'extrémité supérieure est ouverte, présente de manière connue en soi une sortie (9) dont la section de passage peut être modifiée.

**5.** Amortisseur hydraulique selon la revendication 4, **caractérisé par le fait que** la sortie (9) à section de passage variable est un dispositif d'étranglement pouvant être activé par une commande (8).

**6.** Amortisseur hydraulique selon une des revendications 1 à 5, **caractérisé par le fait que** le liquide contenu dans l'amortisseur hydraulique a une masse volumique $\rho > 1000$ kg/m$^3$, de préférence une masse volumique $\rho = 1000\text{-}5000$ kg/m$^3$.

**Fig. 1**

Fig. 2

Fig. 3

Fig. 4

Fig. 5

Fig. 6

Fig. 7

Fig. 8

Fig. 9

Fig. 10

EP 2 193 285 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 10220522 A
- AT 501870 B1
- JP 9151986 A
- JP 5248491 A
- JP 2278033 A
- JP 2000018322 A

**In der Beschreibung aufgeführte Nicht-Patentliteratur**

- **PETERSEN, C.** Schwingungsdämpfer im Ingenieurbau. GmbH&Co.KG, 2001
- **SUN, L.M. ; FUJINO, Y. ; KOGA, K.** A Model Of Tuned Liquid Dampers For Suppressing Pitching Motions Of Structures. *Earthquake Engineering and Structural Dynamics,* 1995, vol. 24, 625-636
- **SUN, L.M. ; NAKAOKA, T. et al.** Tuned liquid damper for suppressing vertical vibration. *Proc. 45th JSCE annual meeting,* 1990, vol. 1, 978-979
- Control of Pedestrian-Induced Vibrations of Long Span Bridges. **REITERER, M. ; ZIEGLER, F.** Journal of Structural Control & Health Monitoring. John Wiley & Sons, Ltd, 2006, vol. 13, 1003-1027
- **FRIED, E. ; IDELCHIK, I.E.** Flow Resistance: a Design Guide for Engineers. *Hemisphere, New York,* 1989
- **DEN HARTOG, J.P.** Mechanische Schwingungen. Verlag von Julius Springer, 1936